**Europäisches Patentamt**

**European Patent Office**

**Office européen des brevets**

(19)

(11) Numéro de publication: **0 007 833**
**B2**

(12) ## NOUVEAU FASCICULE DE BREVET EUROPEEN

(45) Date de publication du nouveau fascicule du brevet
**12.12.84**

(51) Int. Cl.³: **C 01 F 7/30**, C 01 F 7/56

(21) Numéro de dépôt: **79400460.6**

(22) Date de dépôt: **05.07.79**

(54) Nouvelle alumine hautement réactive et son procédé de préparation.

(30) Priorité 26.07.78 FR 7822095

(43) Date de publication de la demande:
**06.02.80 Bulletin 80/3**

(45) Mention de la délivrance du brevet:
**26.08.81 Bulletin 81/34**

(45) Mention de la décision concernant l'opposition:
**12.12.84 Bulletin 84/50**

(84) Etats contractants désignés:
**BE DE FR GB IT NL**

(56) Documents cités:
**FR - A - 2 277 039**
**US - A - 3 459 502**
**US - A - 4 034 067**
**US - A - 4 053 579**

**Physical Properties of Aluminium Compound NH4
AlCO3(OH)2, MITSUI ISAO et SHIMA TAMOTSU et al.
Nippon Denshi Zairyo Gijutsu Kyokai Shuki Koen Taikai
Koen Gaiyoshu 1977, 14, (5-8)
Synthesis and Physical Characteristics of an Aluminium
Compound NH4 AlCO3 (OH)2, SHIMA T. and MITSUI I.,
Nagano-ken Kogyo Shikenjo Gyomu Hokokusho 1976
(30-37)**

Le dossier contient des informations techniques
présentées postérieurement au dépôt de la demande et
ne figurant pas dans le présent fascicule.

(73) Titulaire: **RHONE-POULENC SPECIALITES CHIMIQUES,
"Les Miroirs" 18, Avenue d'Alsace, F-92400 Courbevoie
(FR)**

(72) Inventeur: **Pajot, Michel, 7 avenue du Parc,
F-30340 Salindres (FR)**
Inventeur: **Seigneurin, Laurent, 3 avenue du Parc,
F-30340 Salindres (FR)**

(74) Mandataire: **Savina, Jacques et al, RHONE-POULENC
RECHERCHES Service Brevets Chimie et
Polymères 25, Quai Paul Doumer, F-92408 Courbevoie
Cedex (FR)**

EP 0 007 833 B2

## Description

La présente invention concerne une nouvelle alumine et son precédé de préparation. Elle concerne également l'application de cette nouvelle alumine à la préparation d'hydroxychlorure d'aluminium. Plus particulièrement, l'alumine concernée par la présente invention est une alumine hautement réactive ayant une très grande surface spécifique.

La demande de brevet français n° 7 336 846, publiée sous le numéro FR-A-2 247 425, décrit des alumine actives ayant une surface spécifique d'au moins 200 à 250 m²/g. Ces alumines actives sont préparées par déshydratation partielle d'hydrates d'alumine (hydrargillite) dans un courant de gaz chauds. Cette même demande décrit la préparation d'hydroxychlorures d'aluminium de formule générale $Al_2(OH)_xCl_{6-x}$ qui consiste à faire réagir l'alumine ci-dessus avec des solutions d'acide chlorhydrique et/ou de chlorure d'aluminium.

La demande de certificat d'addition français n° 7 422 968, publiée sous le numéro FR-A-2 277 039, décrit des alumines actives ayant une surface spécifique comprise entre 250 et 600 m²/g. Elles sont obtenues par déshydratation partielle de gels d'alumine obtenus par précipiration de sels d'aluminium ou d'aluminate de soude. Cette demande décrit également l'utilisation de cette alumine active pour la préparation d'hydroxychlorures d'aluminium.

Le caractère actif des alumines utilisées permet d'obtenir des hydroxychlorures d'aluminium dans lesquels x peut atteindre dans le premier cas (alumine active issue d'hydrargillite) la valeur 4 et dans le deuxième cas (alumine active issue de gels amorphes) la valeur de 5.

On sait l'intérêt qu'il y a à pouvoir obtenir des hydroxychlorures de formule générale $Al_2(OH)_xCl_{6-x}$ dans lesquels $x = 5$. C'est en effet à partir de $Al_2(OH)_5Cl$ que l'on prépare des billes d'alumine par la technique dite »oil-drop« ou »sol-gel« bien connue de l'homme de l'art.

Cependant, d'alumine décrite dans la demande de certificat d'addition précitée, si elle permet d'obtenir un hydroxychlorure d'aluminium de formule $Al_2(OH)_5Cl$, laisse subsister un certain nombre d'inconvénients dont les principaux sont dus à la structure même de cette alumine.

En effet, l'alumine activée obtenue par déshydratation partielle des gels amorphes contient une certaine quantité d'alumine $\gamma$. Cette alumine $\gamma$ réagit mal pour donner $Al_2(OH)_5Cl$. Ainsi donc, la réaction de d'alumine issue des gels amorphes avec des solutions d'acide chlorhydrique et/ou de chlorure d'aluminium n'est pas quantitative et le rendement observé n'est que de 80 à 90% environ. Un autre inconvénient lié à la structure de l'alumine utilisée, réside dans le temps de réaction assez long, nécessaire pour la préparation d'hydroxychlorure d'aluminium. Ce temps de réaction est directement lié à la surface spécifique de l'alumine. En effet, plus la surface spécifique augmente plus la surface de contact augmente et plus la vitesse de réaction augmente.

Par ailleurs, on sait, selon le brevet américain numéro US-A-4 053 579, que la décomposition aux environs de 223 C d'un carbonate double d'aluminium et d'ammonium particulier, donne de l'alumine de structure gamma.

Ce qui précède montre bien l'intérêt qu'il y a à pouvoir disposer d'alumine ayant une surface spécifique et une structure cristallographique appropriées pour améliorer sa réactivité.

La présente invention atteint ce but en palliant les inconvénients de l'art antérieur qui ont été précédemment soulignés.

La demanderesse a donc découvert une nouvelle alumine caractérisé en ce qu'elle a une surface spécifique supérieure à 600 m²/g et en ce qu'elle possède une structure amorphe.

Au sens de la présente invention, on entend par structure amorphe, une structure telle que l'analyse aux rayons X donne un diagramme ne présentant pas de raies caractéristiques d'une phase cristalline quelconque.

L'invention a également pour objet un procédé de préparation de l'alumine telle que définie ci-dessus, caractérisé en ce que l'on décompose thermiquement du carbonate double d'aluminium et d'ammonium de formule $AlNH_4CO_3(OH)_2$ a une température comprise entre 200°C et 500°C environ pendant un temps compris entre une fraction de seconde et 5 heures environ.

Le carbonate double d'aluminium et d'ammonium de formule $AlNH_4CO_3(OH)_2$ que l'on décompose selon l'invention est bien cristallisé il présente un diagramme de diffraction des rayons X dont les distances interréticulaires et les intensités relatives ont approximativement les valeurs suivantes:

| dÅ | 1/1₁ | dÅ | 1/1₁ | dÅ | 1/1₁ |
|------|------|-------|------|-------|------|
| 5,82 | 100 | 2,57 | 25 | 1,815 | 2 |
| 4,07 | 21 | 2,25 | 5 | 1,729 | 12 |
| 3,41 | 10 | 2,19 | 7 | 1,657 | 7 |
| 3,32 | 44 | 2,038 | 20 | 1,465 | 3 |
| 2,90 | 18 | 1,991 | 9 | 1,429 | 6 |
| 2,63 | 2 | 1,879 | 2 | 1,410 | 3 |
| | | | | 1,388 | 3 |

La décomposition est, de préférence, conduite à une température comprise entre environ 275° C et 325" C pendant un temps compris entre environ une fraction de seconde et 3 heures.

La décomposition en une fraction de seconde est effectuée à une température relativement élevée, la surface spécifique de l'alumine abtenue ayant tendance à diminuer lorsque la température et/ou le temps de décomposition augmentent. La décomposition entre une fraction de seconde (environ 1/10 de seconde) et environ 10 secondes peut avantageusement être obtenue dans des dispositifs appropriés à l'aide de gas chauds.

Une température relativement basse nécessite un temps de décomposition plus important, la surface spécifique de l'alumine ainsi obtenue variant relativement peu lorsque le temps de décomposition augmente.

Dans les fourchettes de température et de temps données, l'homme de l'Art peut ainsi facilement déterminer par expériences de simple routine, les conditions à mettre en œuvre pour obtenir de l'alumine de structure amorphe et de surface supérieure à 600 m²/g faisant l'objet de la présente invention.

On opère généralement à pression atomsphérique, d'autres pressions n'étant pas catégoriquement exclues par la présente invention.

L'invention a encore pour objet un procédé de préparation d'hydroxychlorures d'aluminium de formule $Al_2(OH)_xCl_{6-x}$, dans laquelle $x \geq 5$, procédé caractérisé en ce que l'on fait réagir de l'alumine telle que définie ci-dessus, avec une solution d'acide chlorhydrique et/ou de chlorure d'aluminium.

La solution d'acide chlorhydrique utilisée a de préférence une concentration comprise entre 1 et 5 N. Des valeurs extérieures à cette fourchette ne sont pas exclues; lorsque la concentration est inférieure à 1 N, les temps de réaction deviennent très élevés; d'autre part, lorsque la concentration augmente, la concentration en alumine dans l'hydroxychlorure d'aluminium final augmente. Ce dernier point est important car, par exemple, si on utilise l'hydroxychlorure d'aluminium obtenu pour préparer des billes d'alumine par le technique »oil-drop« précédemment mentionnée, la concentration en aluminium dans l'hydroxychlorure d'aluminium doit être comprise, de préférence entre 200 et 300 g/l. Cette valeur est obtenue si on utilise une solution d'acide chlorhydrique environ 3 N.

Lorsqu'on utilise une solution de chlorure d'aluminium, sa concentration varie préférentiellement entre 0,25 N et 1,7 N. On opère préférentiellement quand on veut obtenir un hydroxychlorure utilisable dans le procédé »oil-drop« avec une concentration 1 N.

En ce qui concerne la température de réaction, lorsqu'on opère avec une solution d'acide chlorhydrique, la réaction étant exothermique, aucun chauffage initial n'est nécessaire. La température augmente spontanément et on maintient ensuite la température à une valeur adéquate. On opère préférentiellement en maintenant le mélange à la température d'ébullition. Lorsqu'on opère avec du chlorure d'aluminium, la réaction n'est pas exothermique; il y a lieu alors de chauffer le mélange réactionnel, préférentiellement jusqu'à sa température d'ébullition.

On utilise généralement l'alumine et la solution d'acide chlorhydrique et/ou de chlorure d'aluminium dans un rapport molaire $Al_2O_3/HCl$ compris entre 0,95 et 1,05.

Dans ces conditions de température et de concentration, le temps de réaction est généralement compris entre 3 heures et 5 heures.

On opère préférentiellement à pression atmosphérique bien que des pressions plus fortes ou plus basses ne débordent pas du cadre du procédé selon l'invention.

Les avantages d'un tel procédé résident principalement d'une part, dans le temps de réaction considérablement réduit par rapport aux procédés de l'art antérieur (ceci ressortira clairement des exemples) et d'autre part, dans le fait qu'il n'est pas nécessaire d'utiliser un excès d'alumine comme c'était le cas antérieurement. Ces avantages sont dus à la très haute réactivité de l'alumine amorphe et de très grande surface spécifique selon l'invention.

3

On peut préparer le carbonate double d'aluminium et d'ammonium par toute technique connue de l'homme de l'art. On peut, en particulier, opérer à partir de triisopropanolate d'aluminium et de bicarbonate d'ammonium.

Les hydroxychlorures sont utiles par exemple pour la préparation de billes d'alumine par la technique »oil-drop« comme précédemment mentionné. Ils peuvent être encore utilisés dans d'autres applications parmi lesquelles on peut notamment citer le traitement des eaux.

D'autres avantages et caractéristiques de l'invention apparaitront plus clairement à la lecture des exemples qui vont suivre et qui ne sauraient être interprétés comme une limitation de l'invention.

## Exemple 1

### Préparation du carbonate double d'aluminium et d'ammonium $AlNH_4CO_3(OH)_2$

Dans 300 cc à 25°C de benzène absolu contenant une mole de triisopropanolate d'aluminium, on verse en agitant fortement une mole du bicarbonate d'ammonium dépourvu d'humidité. On agite pendant 5 heures puis on verse 100 cc d'eau. Le carbonate double d'aluminium et d'ammonium $AlNH_4(OH)_2CO_3$ précipité est séparé par filtration et lavé à l'eau puis à l'alcool. Le carbonate double d'aluminium et d'ammonium est ensuite séché sous vide à 40°C.

L'analyse par diffraction des rayons X donne les distances interréticulaires et les intensités relatives suivantes:

| d$\text{Å}$ | $1/1_1$ | d$\text{Å}$ | $1/1_1$ | d$\text{Å}$ | $1/1_1$ |
|------|-----|-------|-----|-------|-----|
| 5,82 | 100 | 2,57  | 25  | 1,815 | 2   |
| 4,07 | 21  | 2,25  | 5   | 1,729 | 12  |
| 3,41 | 10  | 2,19  | 7   | 1,657 | 7   |
| 3,32 | 44  | 2,038 | 20  | 1,465 | 3   |
| 2,90 | 18  | 1,991 | 9   | 1,429 | 6   |
| 2,63 | 2   | 1,879 | 2   | 1,410 | 3   |
|      |     |       |     | 1,388 | 3   |

## Exemple 2

### Préparation à partir de carbonate double d'aluminium et d'ammonium, d'alumine amorphe et de très grande surface spécifique

On introduit dans un four du type à moufle maintenu à une température de 350°C, 860 g de carbonate double d'aluminium et d'ammonium obtenu comme dans l'exemple 1. On laisse le carbonate double 3 heures dans le four. On retire 350 g d'un produit comprenant 90% d'$Al_2O_3$ et 10% d'$H_2O$.

L'alumine obtenue a une surface spécifique mesurée par la méthode BET de 650 m$^2$/g.

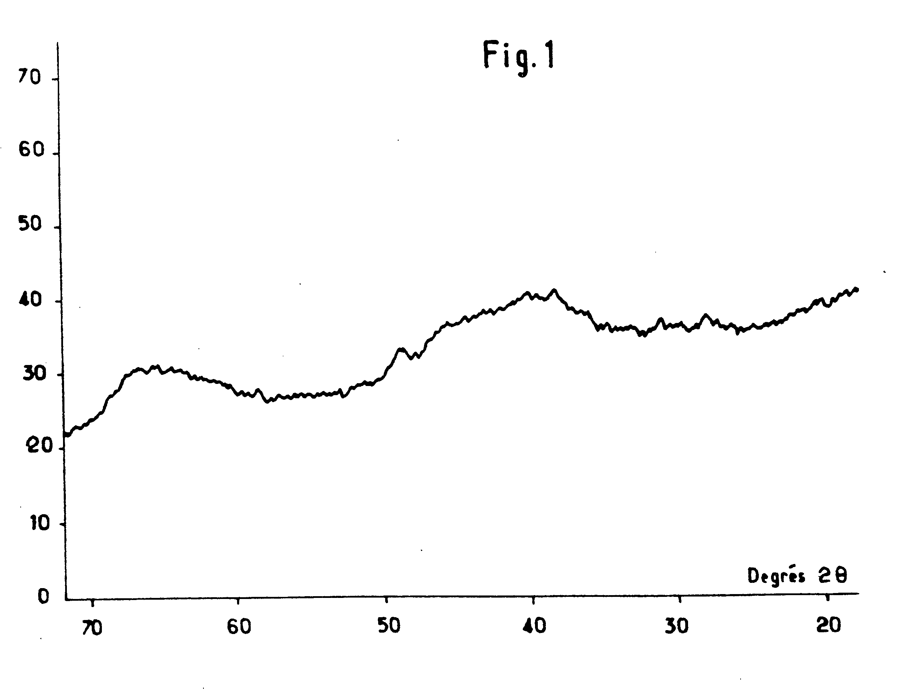

L'analyse par diffraction des rayons X révèle une structure amorphe. Le diagramme obtenu est représenté figure 1.

Afin de pouvoir comparer la structure d'une alumine selon l'invention et une alumine active de surface spécifique élevée, selon l'art antérieur, la préparation suivante a été effectuée:

## Exemple 3

### Préparation à partir de gel amorphe d'alumine d'une alumine active de surface spécifique élevée (art antérieur)

On introduit dans un déshydrateur du type flash dont le gradiant de température varie de 500" à 800°C, un gel amorphe d'alumine sec à 70% d'$Al_2O_3$.

Après un temps de séjour d'une fraction de seconde, on retire un produit comprenant environ 95% d'$Al_2O_3$ et 5% d'$H_2O$.

4

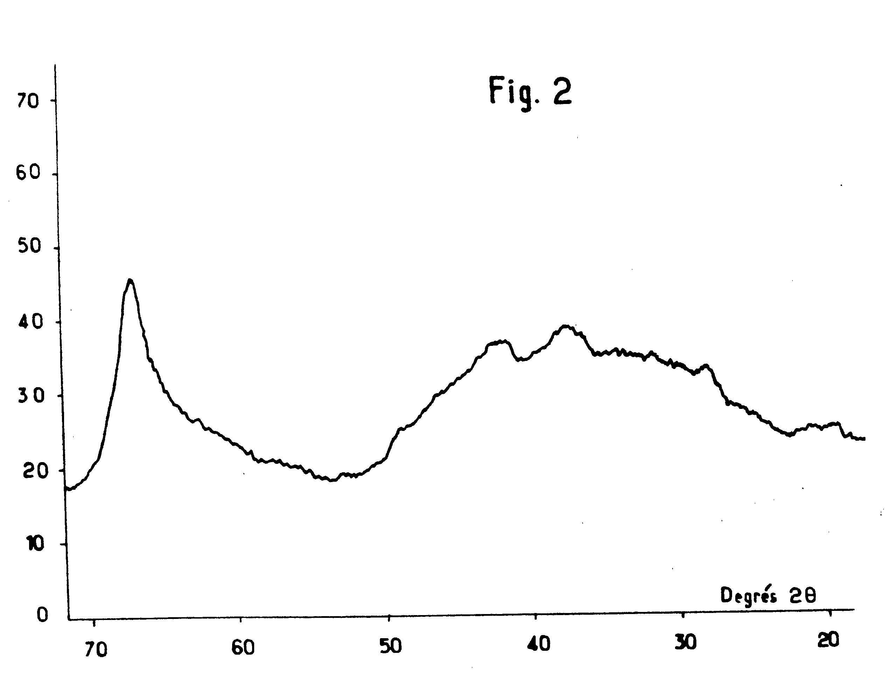

On obtient un produit final ayant une surface spécifique mesurée par la méthode BET, de 375 m²/g et dont le diagramme de rayons X est représenté figure 2.

La comparaison des diagrammes de rayons X ($\gamma$Cu = 1,5405 Å) des figures 1 et 2 illustre clairement la différence de structure des deux alumines. On constate en effet que le pic caractéristique de l'alumine $\gamma$ à 67,03 degrés 2 $\theta$ est présent sur la figure 2 alors qu'il ne figure pas sur la figure 1.

### Exemple 4

On opère comme dans l'exemple 2, mais on opère à une température de 330°C pendant 3 heures.
L'alumine obtenue a une structure amorphe comparable à celle illustrée à la figure 1 et une surface spécifique mesurée par la méthode BET de 667 m²/g.

### Exemple 5

On opère comme dans l'exemple 2, mais on opère à une température de 370°C pendant 3 heures.
L'alumine obtenue a une structure amorphe comparable à celle illustrée à la figure 1 et une surface spécifique mesurée par la méthode BET de 625 m²/g.

### Exemple 6

On opère comme dans l'exemple 2, mais on opère à une température de 250°C pendant 5 heures.
L'alumine obtenue a une structure amorphe comparable à celle illustrée à la figure 1 et une surface spécifique mesurée par la méthode BET de 640 m²/g.

### Exemple 7

On opère comme dans l'exemple 2, mais on opère à une température de 400°C pendant 2 heures.
L'alumine obenue a une structure amorphe comparable à celle illustrée à la figure 1 et une surface spécifique mesurée par la méthode BET de 605 m²/g.

### Exemple 8

#### Préparation d'hydroxychlorure d'aluminium

Dans un appareil agité du type Grignard, on introduit un litre d'une solution d'acide chlorhydrique 3 N puis 350 g d'alumine préparée selon l'exemple 2. La température du milieu réactionnel s'élève à 103°C. L'ensemble est maintenu à ébullition à reflux pendant 4 heures. Après refroidissement à 20°C, on obtient un litre d'une solution d'hydroxychlorure d'aluminium d'une densité de 1,31 et de formule générale $Al_2(OH)_{5,03}CL_{0,97}$.

### Exemple 9

On opère comme dans l'exemple 8, mais on utilise un litre d'une de chlorure d'aluminium 1 M et 320 g d'alumine üréparée selon l'exemple 2. On chauffe le mélange jusqu'à ébullition à reflux et en maintenant cette température pendant 4 heures. Après refroidissement à 20°C, on obtient un litre d'une solution d'hydroxychlorure d'aluminium, d'une densité de 1,31 et de formule générale $Al_2(OH)_{5,0}CL_{0,99}$.

### Exemple 10

On opère comme dans l'exemple 8, mais on utilise un litre d'une solution constituée par 0,51 de chlorure d'aluminium 1 M et 0,51 d'acide chlorhydrique 3 N, puis 335 g d'alumine. La température du milieu réactionnel s'élève à 101°C.

L'ensemble est maintenu à ebullition à reflux pendant 4 heures. Après refroidissement à 20°C, on obtient un litre d'une solution d'hydroxchlorure d'aluminium, d'une densité de 1,31 et de formule générale $Al_2(OH)_{5,03}Cl_{0,97}$.

L'intérêt du procédé selon l'invention, ilustré aux exemples 8, 9 et 10, ressort très clairement de la comparaison de ces exemples avec les exemples des deux demandes de brevet français citées plus haut dans la description de la présente demande. On constate que dans la demande publiée sous le numéro FR.A-2 247 425 les temps de réaction sont de l'ordre de 16 heures, l'alumine activée etant obtenue à partir d'hydrargillite. Dans la demande publiée sous le numéro FR-A-2 277 039 où l'alumine utilisée est obtenue à partir de gel d'alumine amorphe, les temps de réaction sont de l'ordre de 7 heures. De plus, comme indiqué précédemment, dans ces deux demandes de brevets publiées, un excès d'alumine est nécessaire pour conduire la réaction, alors qu'un tel excès n'est pas nécessaire dans les exemples 8, 9 10 ci-dessus.

## Revendications

1. Alumine hautement réactive de structure amorphe caractérisée en ce qu'elle possède une surface spécifique supérieure à 600 m$^2$/g.

2. Procédé de préparation d'alumine de surface spécifique supérieure à 600 m$^2$/g selon la revendicaton 1 par décomposition thermique d'un carbonate double d'aluminium et d'ammonium de formule $AINH_4CO_3(OH)_2$ à une température comprise entre environ 200"C et environ 500"C pendant un temps compris entre une fraction de seconde et 5 heures environ, caractérisé en ce que le carbonate double est bien cristallisé et présente un diagramme de diffraction des rayons X dont les distances interréticulaires et les intensités relatives ont approximativement les valeurs suivantes.

| dÅ | $1/1_1$ | dÅ | $1/1_1$ | dÅ | $1/1_1$ |
|------|------|-------|------|-------|------|
| 5,82 | 100 | 2,57 | 25 | 1,815 | 2 |
| 4,07 | 21 | 2,25 | 5 | 1,729 | 12 |
| 3,41 | 10 | 2,19 | 7 | 1,657 | 7 |
| 3,32 | 44 | 2,038 | 20 | 1,465 | 3 |
| 2,90 | 18 | 1,991 | 9 | 1,429 | 6 |
| 2,63 | 2 | 1,879 | 2 | 1,410 | 3 |
|      |     |      |     | 1,388 | 3 |

3. Procédé selon la revendication 2, caractérisé en ce qu'on décompose thermiquement le carbonate double d'aluminium et d'ammonium à une température comprise entre environ 275"C et 325"C.

4. Procédé selon l'une quelconque des revendications 2 et 3, caractérisé en ce qu'on décompose thermiquement le carbonate double d'aluminium et d'ammonium pendant une période de temps comprise entre environ une fraction de seconde et environ 3 heures.

5. Procédé selon l'une quelconque des revendications 2, 3 et 4, caractérisé en ce qu'on décompose thermiquement le carbonate double d'aluminium et d'ammonium à pression atmosphérique.

## Patentansprüche

1. Hochreaktives Aluminiumoxid amorpher Struktur, gekennzeichnet durch eine spezifische Oberfläche von mehr als 600 m$^2$/g.

2. Verfahren zur Herstellung von Aluminiumoxid mit einer spezifischen Oberfläche von mehr als 600 m$^2$/g gemäß Anspruch 1 durch thermische Zersetzung eines Doppelcarbonats von Aluminium und Ammonium der Formel $AINH_4CO_3(OH)_2$ bei einer Temperatur zwischen etwa 200"C und 500"C in einer Zeit zwischen einem Bruchteil einer Sekunde und etwa 5 Stunden, dadurch gekennzeichnet, daß das Doppelcarbonat wohlkristallisiert ist und ein Röntgenbeugungsdiagramm zeigt, bei dem die Gitterabstände und die relativen Intensitäten etwa folgende Werte aufweisen:

| dÅ | $1/1_1$ | dÅ | $1/1_1$ | dÅ | $1/1_1$ |
|------|-----|-------|----|-------|----|
| 5,82 | 100 | 2,57 | 25 | 1,815 | 2 |
| 4,07 | 21 | 2,25 | 5 | 1,729 | 12 |
| 3,41 | 10 | 2,19 | 7 | 1,657 | 7 |
| 3,32 | 44 | 2,038 | 20 | 1,465 | 3 |
| 2,90 | 18 | 1,991 | 9 | 1,429 | 6 |
| 2,63 | 2 | 1,879 | 2 | 1,410 | 3 |
| | | | | 1,388 | 3 |

3. Verfahren nach Anspruch 2, dadurch gekennzeichnet, daß man das Aluminium- und Ammonium-Doppelcarbonat bei einer Temperatur zwischen 275 und 325° C thermisch zersetzt.

4. Verfahren nach einem der Ansprüche 2 oder 3, dadurch gekennzeichnet, daß man das Aluminium- und Ammonium-Doppelcarbonat während einer Zeitspanne zwischen etwa dem Bruchteil einer Sekunde und etwa 3 Stunden thermisch zersetzt.

5. Verfahren nach irgendeinem der Ansprüche 2, 3 oder 4, dadurch gekennzeichnet, daß man das Aluminium- und Ammonium-Doppelcarbonat bei Atmosphärendruck thermisch zersetzt.

## Claims

1. Highly reactive alumina of amorphous structure, characterised in that it has a specific surface area greater than 600 $m^2$/g.

2. Process for the preparation of alumina of specific surface area greater than 600 $m^2$/g, according to Claim 1, by thermal decomposition of an aluminium and ammonium double carbonate of the formula $AlNH_4CO_3(OH)_2$ at a temperature between about 200°C and about 500°C for a period between a fraction of a second and about 5 hours, characterised in that the double carbonate is well crystallised and has an X-ray diffraction diagram in which the interlattice spacings and the relative intensities have approximately the following values:

| dÅ | $1/1_1$ | dÅ | $1/1_1$ | dÅ | $1/1_1$ |
|------|-----|-------|----|-------|----|
| 5.82 | 100 | 2.57 | 25 | 1.815 | 2 |
| 4.07 | 21 | 2.25 | 5 | 1.729 | 12 |
| 3.41 | 10 | 2.19 | 7 | 1.657 | 7 |
| 3.32 | 44 | 2.038 | 20 | 1.465 | 3 |
| 2.90 | 18 | 1.991 | 9 | 1.429 | 6 |
| 2.63 | 2 | 1.879 | 2 | 1.410 | 3 |
| | | | | 1.388 | 3 |

3. Process according to Claim 2, characterised in that the aluminium and ammonium double carbonate is decomposed thermally at a temperature of between about 275°C and 325°C.

4. Process according to either of Claims 2 and 3, characterised in that the aluminium and ammonium double carbonate is decomposed thermally over a period of between about a fraction of a second and about 3 hours.

5. Process according to any one of Claims 2, 3 and 4, characterised in that the aluminium and ammonium double carbonate is decomposed thermally at atmospheric pressure.

Fig.1

Degrés 2θ

0 007 833

Fig. 2

Degrés 2θ

0 007 833